# EUROPEAN PATENT SPECIFICATION

(11) **EP 2 040 185 B1**
(45) Date of publication and mention of the grant of the patent: **24.11.2021**
(21) Application number: 08170532.9
(22) Date of filing: 09.05.2007
(51) Int. Cl.: G06F 16/58

(54) **User Interface for Selecting a Photo Tag**
Benutzerschnittstelle zur Auswahl eines Fotoetiketts
Interface utilisateur pour sélectionner une étiquette de photo

(43) Date of publication of application: 25.03.2009
(62) Divisional of application: 07107866.1
(73) Proprietor: BlackBerry Limited, Waterloo, ON N2K 0A7 (CA)
(72) Inventor: Brown, Michael S., Kitchener, Ontario N2K 4J4 (CA); Klassen, Gerhard D., Waterloo, Ontario N2T 1H7 (CA); Dent, Terrill, Waterloo, Ontario N2L 3M6 (CA)
(74) Representative: MERH-IP Matias Erny Reichl Hoffmann Patentanwälte PartG mbB

(56) References cited:
- US-A1- 2004 039 988
- US-A1- 2005 021 970
- BALLAGAS R ET AL: "The Smart Phone: A Ubiquitous Input Device" PERVASIVE COMPUTING, IEEE, [Online] vol. 5, no. 1, January 2006 (2006-01), pages 70-77, XP002447195 ISSN: 1536-1268 Retrieved from the Internet: URL:http://ieeexplore.ieee.org/iel5/7756/3 3539/01593574.pdf?tp=&isnumber=&arnumber=1 593574> [retrieved on 2007-08-17]
- MISCHA M TUFFIELD ET AL: "Image annotation with Photocopain", PROCEEDINGS OF THE INTERNATIONAL CONFERENCE ON WORLD WIDE WEB, XX, XX, 26 May 2006 (2006-05-26), pages 1-14, XP002472264,

## Description

The present invention relates generally to a user interface for selecting a photo tag.

Identifying people or objects in photographs is popular in many online contexts, such as photo sharing, social networking, etc. Selecting a "tag" to associate with an identified point in a photograph can be a complicated task if there are many potential tags to choose from. In addition, wireless mobile communication device where there are constraints on the size of the display and the flexibility of the input method, some of these common techniques used on desktops and laptops with full sized screens do not work as well.

What is needed is an improved user interface for selecting tags in a smaller display, such as may be found on a wireless mobile communication device.

WO2006/102656 discloses methods for transmitting personal data and metadata between different devices and storing the personal data together with the metadata. The personal data may be a video, an audio file or an image and the metadata is tagged to the personal data and describes the video, audio or image capture event.

US2005/0021970 discloses a data embedding and watermarking method and apparatus for images that allows for multiple levels of data to be encoded and retrieved, increasing image data content and information in a manner that cannot be lost or separated from the image. The system describes methods and apparatus for encoding and decoding the multiple data fields utilizing multiple layer watermarking where images include two or more data fields/layers watermarked into them or within one or more of their sub-images/objects. The system may also associate the multiple layers of data directly with an image or sub-image allowing the data to be specific to the image/sub-image and contextual, reducing the potential for reader misunderstanding and improving communication.

"ZoneTag: Designing Context-Aware Mobile Media Capture to Increase Participation" Workshop on Pervasive Image Capture and Sharing 2006, Ubicomp 2006 discloses the use of the ZoneTag application where a user can upload a newly captured image from her cameraphone to Flickr. In particular, if the user decides to upload the captured image, more options are shown to allow the users to control various features, and add or change the metadata tags associated with the image. More specifically, the user is presented with a list of tags pre-fetched from the ZoneTag server and presented in order of likelihood of being selected for the current context. The tags are grouped into categories that reflect tag sources, graphically organized as tabs. Within each category a user can search through the available tags by entering the first few letters of a tag in the search box.

### GENERAL

In one aspect of the invention, there may be provided a method of photo tagging and tag searching using a mobile communication device having a display, comprising: presenting a tagging mode user interface for user selection of a location for tagging within a photo; presenting a tag entry field for receiving, as a photo tag, a text string entered by a user, the photo tag associated with the user selected location within the photo; searching a plurality of tag sources for tags that match the text string, wherein the tag sources correspond to one of a list of friends from an online service, a list of browser bookmark entries in an Internet browser module of the mobile communication device and a list of address book entries in an address book of the mobile communication device ;displaying in a matching tag list any tags that match the text string to allow user selection of a tag in the matching tag list to complete the tag entry field, and displaying a tag type for each tag appearing in the matching tag list, the tag type being associated with an icon, the tag type corresponding to one of the friend list from the online service, a browser bookmark entry in the Internet browser module of the mobile communication device, and an address book entry in the address book of the mobile communication device; displaying a tag list with the photo, the tag list including one or more tags associated with subjects or objects within the photo, each tag in the tag list having associated context depending on the tag type of the respective tag; and activating, when the user scrolls over a tag in the tag list, a menu including context sensitive menu options associated with a specific tag type of the respective tag.

In another aspect of the invention, there may be provided a method in a data processor device of selecting a photo tag for a tagged photo, comprising: providing a tag entry field for entering a photo tag; and in dependence upon a string entered by a user, displaying in a matching tag list any tags from one or more selected tag sources matching the entered string.

In another embodiment, the method may further comprise ordering tags in the matching tag list by tag type.

The invention is defined by the features of the independent claims. Further embodiments are the subject-matter of the dependent claims.

### BRIEF DESCRIPTION OF THE DRAWINGS

In the figures which illustrate exemplary embodiments:
FIG. 1 is an illustration of a device in accordance with an embodiment;
FIG. 2 is a schematic block diagram of a communication subsystem component in the device of FIG. 1;
FIGS. 3A to 3E are illustrative user interface screens for editing photo tags in accordance with an embodiment;
FIGS. 4A to 4F are illustrative user interface screens for selecting a photo tag in accordance with an embodiment;
FIG. 5 is an illustrative flowchart of a method for editing photo tags in accordance with an embodiment; and
FIG. 6 is an illustrative flowchart of a method for selecting a photo tag in accordance with an embodiment.

### DESCRIPTION OF PREFERRRED EMBODIMENTS

As noted above, the present invention may relate to a user interface for selecting a photo tag, particularly within a smaller display, such as may be found on a wireless mobile communication device.

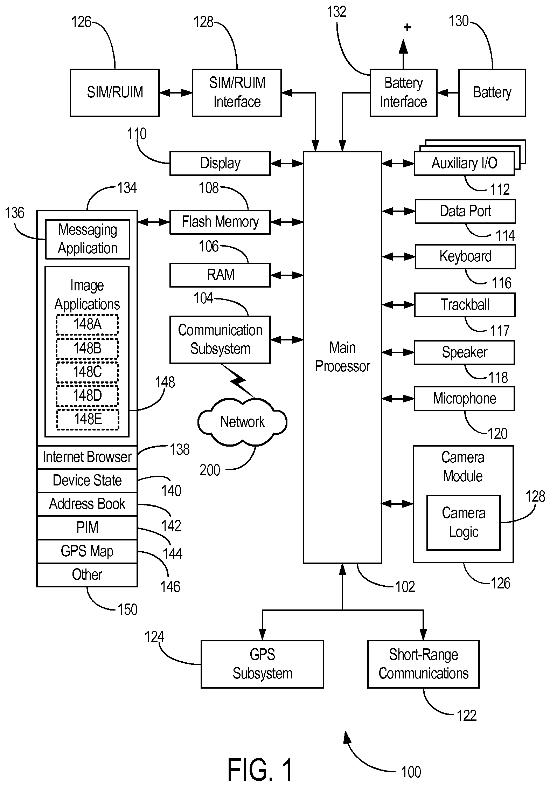

In an illustrative embodiment, the invention may be practiced with a handheld mobile communication device in a wireless operating environment. Shown in FIG. 1 is a schematic block diagram of an illustrative handheld mobile communication device 100. The communication device 100 may comprise a number of components, including a main processor 102 which controls the overall operation of communication device 100. Communication functions, including data and voice communications, may be performed through a communication subsystem 104. The communication subsystem 104 may receive messages from and send messages to a wireless network 200.

The main processor 102 may also interact with additional subsystems such as a random access memory (RAM) 106, a flash memory 108, a display 110, an auxiliary input/output (I/O) subsystem 112, a data port 114, a keyboard 116, a trackball 117, a speaker 118, a microphone 120, short-range communications 122, a GPS subsystem 124, a camera module 126, and associated camera logic 128.

Some of the subsystems of the communication device 100 may perform communication-related functions, whereas other subsystems may provide "resident" or on-device functions. By way of example, the display 110 and the keyboard 116 may be used for both communication-related functions, such as entering a text message for transmission over the network 200, and device-resident functions such as a calculator or task list. The trackball 117 may be used for various navigation functions, such as navigating through a graphical user interface (GUI) menu displayed on display 110. The trackball 117 may also be configured with a secondary actuation feature, such as allowing a user to depress the trackball, to allow selection of a highlighted item.

The camera module 126 may be adapted to capture an image through a lens onto a light sensitive image sensor such as a charge coupled device (CCD) sensor array or a complementary metal oxide semiconductor (CMOS) sensor array. The camera lens may be a fixed focus lens, or a variable focus lens with or without zoom features and controlled by camera logic 128 to focus an image onto the CCD or CMOS sensor array. The size and pixel density of the CCD or CMOS sensor array may be suitably selected for the image resolution required for a particular application. Camera logic 128 may also control the camera lens aperture and/or shutter speed by incorporating a suitable light exposure meter. Image capture using camera module 126 may initiated by a user controlling a dedicated camera shutter, or a context dependent programmable button or key (on keyboard 116, for example) that may act as a camera shutter button.

Once captured by the CCD or CMOS sensor array, the image may then be processed by camera logic 128 into a suitable digital image file format such as Joint Photographic Experts Group (JPEG), Tagged-Image File Format (TIFF), Bit Mapping (BMP), different variations on these standard image file formats, or a vendor proprietary RAW image format. The image file format may allow for the addition of image meta-data to an image file in an industry standards exchangeable image file format (EXIF), or in some vendor proprietary meta-data format. The image file may then be stored in available device storage such as RAM 106 or flash memory 108, and displayed on display 110.

Still referring to FIG. 1, operating system software used by the main processor 102 is typically stored in a persistent store such as flash memory 108. Those skilled in the art will appreciate that the operating system, specific device applications, or parts thereof, may be temporarily loaded into a volatile store, such as the RAM 106, for processing by main processor 102.

The communication device 100 may send and receive communication signals over the wireless network 200 after required network registration or activation procedures have been completed. Network access may be associated with a subscriber or user of the communication device 100.

The communication device 100 may be a battery-powered device and may include a battery interface 132 for receiving one or more rechargeable batteries 130. In some embodiments, the battery 130 may be a smart battery with an embedded microprocessor. The battery interface 132 is coupled to a regulator (not shown), which assists the battery 130 in providing power V+ to the communication device 100. The battery 130 may be used to power all components and modules in the communication device 100, including the camera module 126 and associated camera logic 128.

The main processor 102, in addition to its operating system functions, enables execution of various software applications 134 on the communication device 100. A subset of software applications 134 that control basic device operations, including data and voice communication applications, will normally be installed on the communication device 100 during its manufacture.

The software applications 134 may include a messaging application 136. The messaging application 136 can be any suitable software program that allows a subscriber or user of the communication device 100 to send and receive wireless text communications. Various alternatives exist for the messaging application 136 as is well known to those skilled in the art. Messages that have been sent or received by the user are typically stored in local storage such as flash memory 108 of the communication device 100, or in some other suitable storage element in the communication device 100. In an alternative embodiment, some of the sent and received messages may be stored remotely from the communication device 100 such as in a data store of an associated host system that the communication device 100 communicates with. In an embodiment, the messaging application 136 may include a Message List user interface that is configured to allow a user to see a list of message objects (i.e. email messages) in a convenient list form. This will be described in detail further below.

Still referring to FIG. 1, communication device 100 may execute an Image Applications Module 148 that may be operatively integrated with camera module 126, camera logic 128, main processor 102, RAM 106, display 110 and various other modules and components to provide various image application functions for the images captured by the camera module 126. Image Applications Module 148 may include various sub modules which may interact with each other, and with other application modules such as the messaging application 136, Internet browser module 138, address book module 142, etc. in order to perform various functions.

In an embodiment, one of the sub modules of the Image Applications Module 148 may be a photo tagging module 148A configured to allow a user to identify various subjects and objects within a photo. Photo tagging module 148A will be discussed in more detail further below.

In an embodiment, another of the sub modules of the Image Applications Module 148 may be a photo tagging module 148A configured to allow a user to select a photo tag from a list of tags associated with various subjects and objects within a photo. Photo tag selection module 148B will be discussed in more detail further below.

The communication device 100 may further include a device state module 140, an address book 142, a Personal Information Manager (PIM) 144, and various other modules 150. Additional software applications may also be loaded onto the communication device 100 through at least one of the wireless network 200, the auxiliary I/O subsystem 112, the data port 114, the short-range communications subsystem 122, or other device subsystem 124.

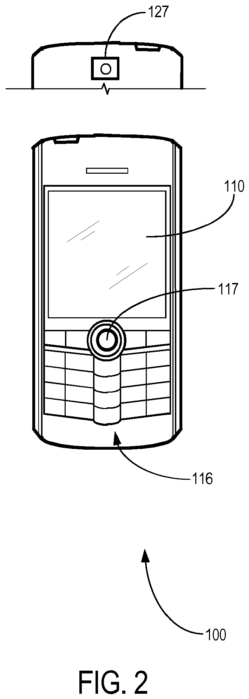

Now referring to FIG. 2, shown is an illustrative front view of a handheld mobile communication device 100 that may provide a suitable operating environment. As shown, the communication device 100 may include a display 110, a keyboard 116, and other input or navigation means such as a trackball 117. The display 110 may be configured to display various screens allowing the user of device 100 to view screen outputs from the various software applications 134, including the image applications 148. Display 110 may also be configured to provide a touch-sensitive screen input in response to a prompt or query displayed on display 110. The communication device 100 may further include a camera lens that may be used to capture an image as described above with reference to FIG. 1. In an embodiment, the integrated camera 126 may provide a camera lens 127 on the back of the communication device 100, such that a user may use the display 110 as a camera viewfinder for framing an image.

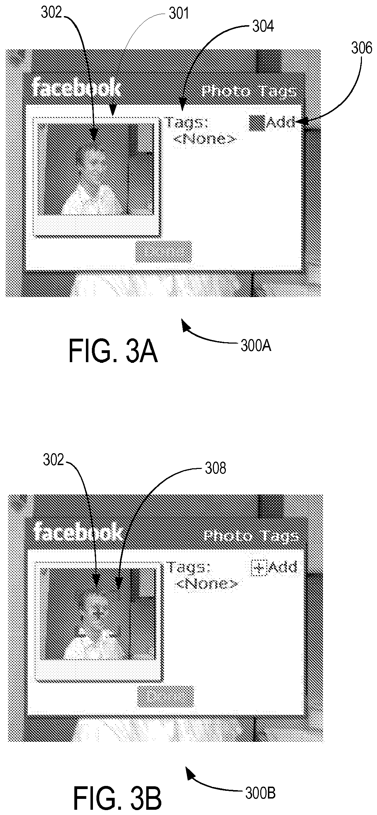

Now referring to FIG. 3A, shown is an illustrative user interface screen 300A in which photo tagging module 148A may be configured for tagging a photograph in accordance with an embodiment. As shown, a photo 301 of a subject 302 is displayed within the boundaries of the user interface. With this user interface, a tag list 304 may include various tags associated subject 302 or other subjects or objects within the photo 301. The user may click an "Add" button 306 in order to enter a photo tagging mode as described below.

Now referring to FIG. 3B, as shown in screen 300B, once in the photo tagging mode, the photo tagging module 148A may be configured to display to the user a pointer, such as cross-hair pointer 308 on the photo 301. The user may move the cross-hair pointer 308 around the photo 301, but unlike common web browser interfaces, the cross-hair pointer 308 may be constrained by the photo tagging module 148A to be navigable only within the boundaries of the photo 301. The user does not have the ability to move the cross-hair pointer around the rest of the screen and perform other tasks, and the navigation device (e.g. trackball 117) is thus dedicated to this photo tagging function until the user exits tagging mode. As will be appreciated, this may allow users to avoid inadvertently clicking on some button or menu option just outside of the borders photo 301 when attempting to tag a subject or object near an edge of the photo. This may be particularly useful on a smaller display, where greater dexterity may be required in order to navigate within a small area using a small navigation device.

When in tagging mode, the user may cancel tagging mode using the escape key and return to simply viewing the existing tag information. Alternatively, the user may choose to add a tag at the current location of the crosshair pointer 308 using an enter key or clicking on the navigation device (e.g. trackball 117).

If the user chooses to add a tag, the user may be presented with another user interface to select the tag type and the context information associated with the tag. As an illustrative example, the tag types could include a free-form alphanumeric string, Facebook™ friends, address book entries (in address book 142), browser bookmarks (in Internet browser module 138), etc.

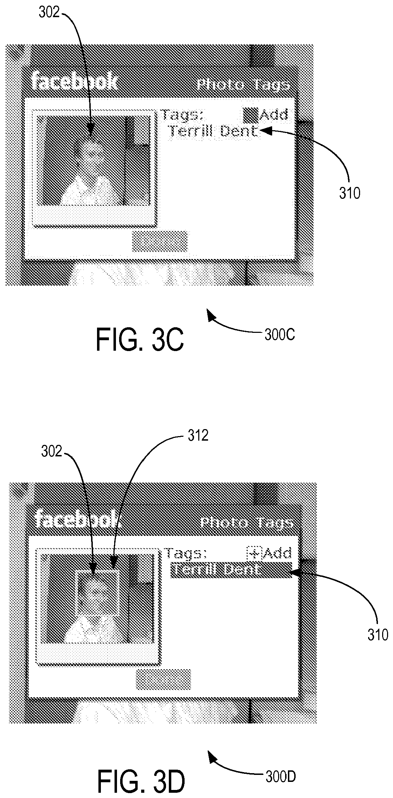

Now referring to FIG. 3C, as shown by way of illustration in screen 300C, when a tag has been added by a user using photo tagging module 148A, the added tag 310 associated with subject 302 may appear in the tag list 304 near the photo 301.

In an embodiment, the tag 310 could also include an icon, or some other type of visual indicator adjacent the tag 310, indicating what type of tag it is. Thus, many different types of tags may be used to tag subjects or objects in the photo 301.

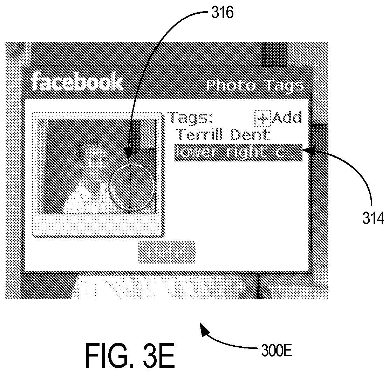

Now referring to FIG 3D, as shown by illustration in screen 300D, when the user scrolls over the tag 310 in the tag list 304, the corresponding subject 302 in the photo may be highlighted by the photo tagging module 148A in some way. This highlighting could be different, depending on what type of tag it is. For example, for a Facebook™ friend the pointer could be a grey square pointer 312 (e.g. like Facebook uses online). As another example shown in screen 300E of FIG. 3E, for a free-form text tag 314, the tagged point in the photo 301 could be indicated with a circle pointer 316.

When the user scrolls over a tag 310 in the tag list 304, a menu may be activated with options associated with the tag. For example, there may be menu items to edit or delete the tag. There may also be context sensitive menu options associated with the specific tag type. For example, for a Facebook friend there may be an item to view the friend's Facebook profile. For an address book entry, there may be an item to view the user's address card. For a browser bookmark, there may be an item to visit that website.

In another embodiment, once subjects or objects have been tagged in the photo 301, photo tagging module 148A may be configured such that upon user selection of a tag 310 in the tag list 304 the corresponding tagged subject or object in the photo 301 may be highlighted using the corresponding pointer identifying the tag type.

In another embodiment, once subjects (e.g. subject 302) or objects have been tagged in the photo 301, photo tagging module 148A may be configured such that upon user selection of or scrolling over a tagged subject or object in the photo 301, the corresponding tag 310 may be highlighted in the tag list 304. As well, context data associated with the tag may be displayed (e.g. in a pop-up window) upon user selection, or automatically if so configured.

Thus, using the above described user interface, a plurality of tag types may be used to tag subjects and objects in a photo, and a type-specific data may be associated with each tag -- such as the visual indicator or symbol used to highlight the tagged subject or object in the photo, the custom actions available for the tag, etc.

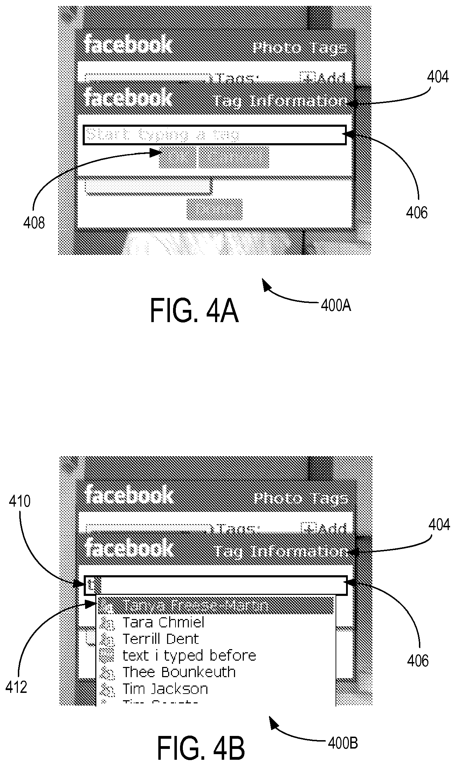

Now referring to FIG. 4A, shown in screen 400A is an illustrative tag selection user interface 404 for displaying a tag search facility as may be presented by photo tag selection module 148B. As shown in FIG. 4A, the user is initially presented with a tag entry field 406 indicating that he should start typing a tag. Upon completion of typing, the user may click "OK" 408 to select the tag.

In an embodiment, as the user begins to type, photo tag selection module 148B may be configured to search one or more selected "tag sources" for tags that match the currently entered text. As shown by way of illustration in screen 400B of FIG. 4B, these tag sources could include, for example, a list of friends from an online service like Facebook™, a list of contacts from the user's address book 142, a list of the user's browser bookmarks (in Internet browser 138), a cache of recent free-form text entries, etc.

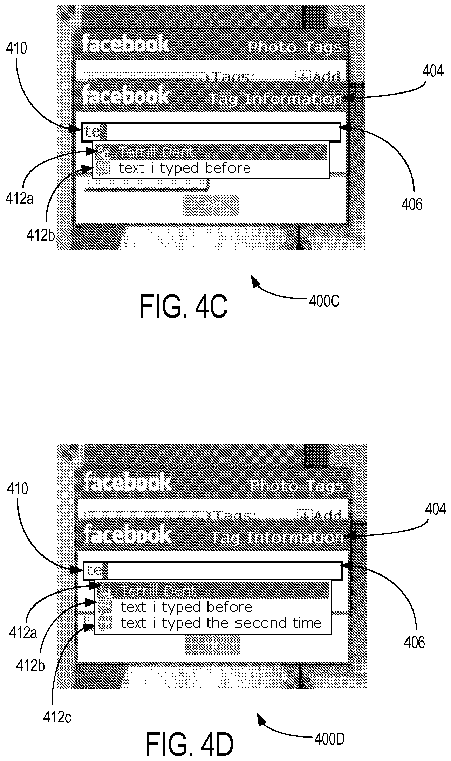

As shown in screen 400C of FIG. 4C, and 400D of FIG. 4D, photo tag selection module 148B may be configured to display any matching tags (e.g. 412a, 412b, 412c) from one of the tag sources to the tag being typed by the user in the tag entry field 406 in a matching tag list 412. Each tag may have an icon or some other visual identifier associated with it that clearly indicates its type, and allows the user to quickly distinguish between different types of tags.

If the user types text that does not match any tag from the tag sources in the matching tag list 412, the photo tag selection module 148B may create a new free-form tag entry and add it to a free-form text cache as a new tag entry. The free-form text cache may then become one of the tag sources for any subsequent tag selection by the user.

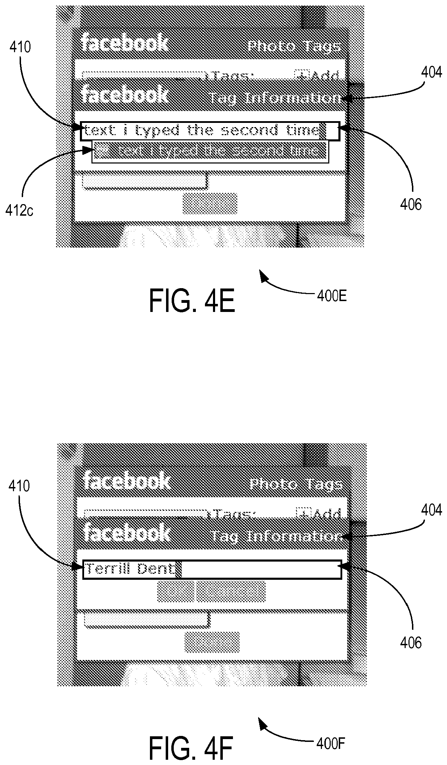

As the user continues to type, if a tag that the user wishes to select appears in the matching tag list 412, the user can scroll to the tag in the matching tag list 412 and select it by pressing enter or clicking on the navigation device (e.g. trackball 117). For example, as shown in screen 400E of FIG. 4E, the user may select a tag 412c which may then be placed into the tag entry field 406. The matching tag list 412 then disappears, and the selected tag may appear beside the photo (e.g. tag 310 as shown in FIG. 3C associated with subject 302 in the photo 301).

Significantly, as the matching tag list 412 includes possible tags that may be used from various selected tag sources (such as the user's Facebook friends, the user's address book 142, a list of the user's browser bookmarks from Internet browser 138, a cache of the recent free-form text entries, etc.), the user is provided with a simple way to associate subjects or objects in a photo with a predefined "tag" from one of a number of selected tag sources, as may be defined by the user. Thus, the free-form text cache would just be one of many possible tag sources, all of which contribute matching tag entries to the matching tag list 412.

Now referring to FIG. 4F, once a tag has been entered into the tag entry field 406, photo tag selection module 148B may be configured to allow the user to choose to view some context data associated with the tag (e.g. an address card if the tag identifies a contact in the user's address book 142). Finally, photo tag selection module 148B may be configured to allow the user to accept the new tag and return to the photo tagging user interface (described above with respect to FIGS. 3A to 3E), or cancel the tag selection and return to the photo tagging user interface.

In an embodiment, in addition to the tag sources mentioned above, another type of tag source may be landmark tags with associated geographic location information. For example, if a photo contains a number of distinctive landmarks, it may be possible for each landmark to be tagged with a unique geographic location tag (e.g. specific latitude and longitude coordinates for each landmark). Such a list of geographic location tags may be obtained, for example, as a user visits each of the landmarks identified in the photo.

For example, an aerial photo of the National Mall in Washington DC may show a number of famous landmarks such as the Lincoln Memorial, Vietnam Veterans Memorial, and The Washington Monument in the same photo. A user who has visited each of these landmarks, provided appropriate names, and recorded geographic location information at each landmark location may then subsequently select a landmark tag by name from the prepared landmark tag list in order to tag the appropriate points in the photo at which each of the landmarks appear. Once a user tags each landmark appearing in the photo using the appropriate landmark tag, the corresponding geographic coordinates also become available as context based information accessible through the tag.

In an alternative embodiment, a list of famous landmarks for various cities may be prepared by a third party such that a user need not be at each location to record the geographic coordinates. In this case a landmark tag may be selected by a user from a prepared landmark list that may be selected as one of the tag sources.

In the tag selection interface described above, each tag may have some context associated with it, depending on the tag type. As will be appreciated, this associated context may allow the user to visually identify and differentiate between the tag types in the tag selection user interface 404, and present other context sensitive menu options, such as viewing associated address cards, Facebook profiles, websites, geographic location information for landmarks, etc.

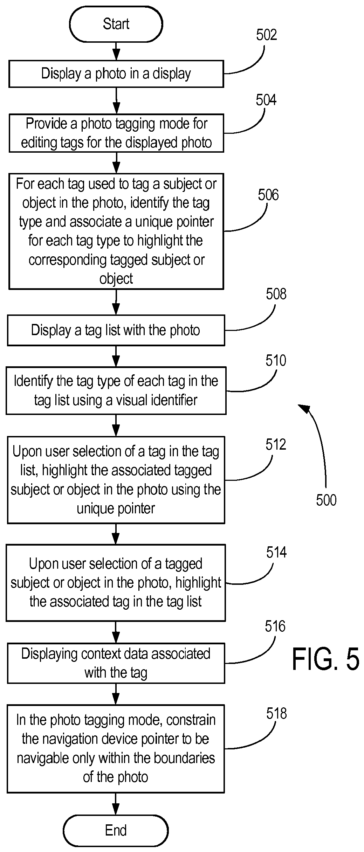

Now referring to FIG. 5, shown is a flowchart of an illustrative method 500 in accordance with an embodiment. As shown, method 500 begins and at block 502 where method 500 displays a photo in a display (e.g. display 110) to be tagged.

Method 500 then proceeds to block 504, where method 500 may configure photo tagging module 148A to provide a photo tagging mode for editing tags for the displayed photo.

Method 500 may then proceed to block 506, where for each tag used to tag a subject or object in the photo, method 500 may configure photo tagging module 148A to identify the tag type and associate a unique pointer for each tag type to highlight the corresponding tagged subject or object. For example, as described earlier, a grey square could be used for Facebook friends, and another shape and/or colour may be used for address book tag types.

Method 500 may then proceed to block 508, where method 500 may configure photo tagging module 148A to display a tag list with the displayed photo.

Method 500 may then proceed to block 510, where method 500 may configure photo tagging module 148A to identify the tag type of each tag in the tag list using a visual identifier. For example, the visual identifier may be an icon, or some suitable graphic appearing beside a tag name.

Method 500 may then proceed to block 512, where upon user selection of a tag in the tag list, method 500 may configure photo tagging module 148A to highlight the associated tagged subject or object in the photo using the unique pointer.

Method 500 may then proceed to block 514, where upon user selection of a tag in the tag list, method 500 may configure photo tagging module 148A to highlight the associated tag in the tag list.

Method 500 may also proceed to block 516, where method 500 may configure photo tagging module 148A to display context data associated with a tag. For example, context data associated with an address book type may be the email address, name, and other information stored in the address book module 138 for the corresponding address book entry. In an embodiment, the context data associated with the tag could be displayed within a menu that may be accessed by a suitable menu selection associated with each tag. Method 500 then ends.

Method 500 may also proceed to block 518, where method 500 may configure photo tagging module 148A to constrain the navigation device pointer to be navigable only within the boundaries of the photo.

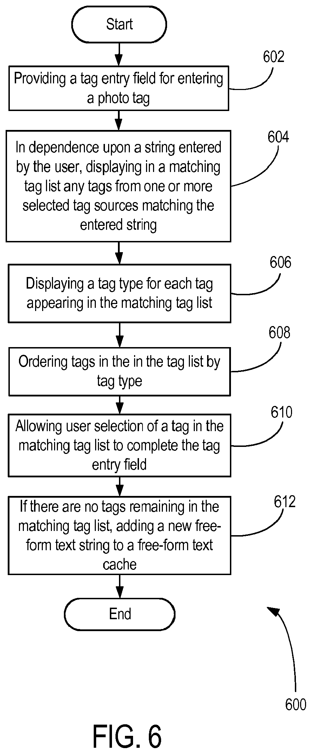

Now referring to FIG. 6, shown is a flowchart of an illustrative method 600 in accordance with an embodiment. As shown, method 600 begins and at block 602 where method 600 provides a tag entry field for entering a photo tag.

Method 600 may then proceed to block 604, where in dependence upon a string entered by the user in the tag entry field, method 600 may configure photo tag selection module 148B to display in a matching tag list 412 any tags (412a, 412b, 412c) matching the entered string.

Method 600 may then proceed to block 606, where method 600 may configure photo tag selection module 148B to display a tag type for each tag appearing in the matching tag list 412. For example, the visual identification may be an icon, or other suitable graphic identification appearing with the tag name.

Method 600 may then proceed to block 608, where method 600 may configure photo tag selection module 148B to order the matching tags in the tag list by tag type in order to make is easier for the user to select a suitable tag by tag type.

Method 600 may also proceed to block 610, where method 600 may configure photo tag selection module 148B to allow user selection of a tag in the matching tag list to complete the tag entry field 406.

Method 600 may then proceed to block 612, where if there are not matching tags appearing in the matching tag list 412, then method 600 may add the new free-from text tag to a free-form text tag cache.

Method 600 may then proceed to block 614, where method 600 may configure photo tag selection module 148B to select the free-form text tag cache as one of the tag sources for any subsequent tag selection by the user. Method 600 then ends.

While illustrative embodiments have been described above, it will be appreciated that various changes and modifications may be made. More generally, the scope of the invention is defined by the following claims.

## Claims

1. A method of photo tagging and tag searching using a mobile communication device having a display, the method comprising:
presenting a tagging mode (148A) user interface for user selection of a location (302) for tagging within a photo (301);
presenting a tag entry field (406) for receiving, as a photo tag (412a, 412b, 412c), a text string entered by a user, the photo tag (412a, 412b, 412c) associated with the user selected location (302) within the photo (301);
searching a plurality of tag sources for tags that match the text string, wherein the tag sources correspond to one of a list of friends from an online service, a list of browser bookmark entries in an Internet browser module (138) of the mobile communication device or a list of address book entries in an address book (142) of the mobile communication device;
displaying in a matching tag list (412) any tags (412a, 412b, 412c) that match the text string to allow user selection of a tag in the matching tag list (412) to complete the tag entry field (406), and displaying a tag type for each tag (412a, 412b, 412c) appearing in the matching tag list (412), the tag type being associated with an icon, the tag type corresponding to one of the list of friends from the online service, a browser bookmark entry in the Internet browser module (138) of the mobile communication device, or an address book entry in the address book (142) of the mobile communication device;
displaying a tag list (304) with the photo (301), the tag list (304) including one or more tags (310) associated with subjects or objects within the photo (301), each tag (310) in the tag list having associated context depending on the tag type of the respective tag (310); and
activating, when the user scrolls over a tag (310) in the tag list (304), a menu including context sensitive menu options associated with a specific tag type of the respective tag (310).

2. The method of claim 1, further comprising ordering tags (412a, 412b, 412c) in the matching tag list (412) by tag type.

3. The method of any one of the preceding claims, further comprising:
if there are no tags (412a, 412b, 412c) remaining in the matching tag list (412), adding a new free-form text string to a free-form text cache.

4. The method of any one of the preceding claims, wherein searching the plurality of tag sources for tags that match the text string, includes searching at least two of a list from an online service, a browser bookmark, an address book entry, and a free-form text entry.

5. A system for searching for photo tags using a mobile communication device having a display that presents a tag selection mode (148B) user interface, comprising:
a memory (106) for storing data processor readable instructions; and
a processor (102) capable of executing said data processor readable instructions to cause said system to perform the steps of the method of any one of claims 1 to 4.

6. The system of claim 5, wherein said system comprises a mobile communication device (100).

7. A data processor readable medium storing data processor code that when loaded into a computing device adapts the computing device to perform the steps of the method of any one of claims 1 to 4.

## Patentansprüche

1. Verfahren zum Fotoetikettieren und Etikettsuchen unter Benutzung eines mobilen Kommunikationsgeräts mit einem Display, das Verfahren umfassend:
Darstellen einer Etikettiermodusbenutzerschnittstelle (148A) zur Benutzerauswahl einer Stelle (302) zum Etikettieren innerhalb eines Fotos (301);
Darstellen eines Etiketteingabefelds (406) zum Empfangen, als ein Fotoetikett (412a, 412b, 412c), einer Textzeichenfolge durch einen Benutzer, wobei das Fotoetikett (412a, 412b, 412c) mit der benutzerausgewählten Stelle (302) innerhalb des Fotos (301) assoziiert ist;
Absuchen von mehreren Etikettquellen nach Etiketten, die mit der Textzeichenfolge zusammenpassen, wobei die Etikettquellen einer einer Liste von Freunden aus einem Onlinedienst, einer Liste von Browserlesezeicheneinträgen in einem Internet-Browsermodul (138) des mobilen Kommunikationsgeräts oder einer Liste von Adressbucheinträgen in einem Adressbuch (142) des mobilen Kommunikationsgeräts entsprechen;
Anzeigen in einer passenden Etikettenliste (412) von jeglichen Etiketten (412a, 412b, 412c), die zu der Textzeilenfolge passen, um eine Benutzerauswahl eines Etiketts in der passenden Etikettenliste (412) zum Komplettieren des Etiketteingabefelds (406) zu ermöglichen, und Anzeigen eines Etikettentyps für jedes Etikett (412a, 412b, 412c), das in der passenden Etikettenliste (412) erscheint, wobei der Etikettentyp mit einem Symbol assoziiert ist, wobei der Etikettentyp einer der Liste von Freunden aus dem Onlinedienst, einem Browserlesezeicheneintrag im Internet-Browsermodul (138) des mobilen Kommunikationsgeräts oder einem Adressbucheintrag im Adressbuch (142) des mobilen Kommunikationsgeräts entspricht;
Anzeigen einer Etikettenliste (304) mit dem Foto (301), wobei die Etikettenliste (304) ein oder mehr Etiketten (310) enthält, die mit Personen oder Objekten innerhalb des Fotos (301) assoziiert sind, wobei jedes Etikett (310) in der Etikettenliste assoziierten Kontext aufweist, der vom Etikettentyp des jeweiligen Etiketts (310) abhängt; und
Aktivieren, wenn der Benutzer über ein Etikett (310) in der Etikettenliste (304) scrollt, eines Menüs, das kontextsensitive Menüoptionen enthält, die mit einem spezifischen Etikettentyp des jeweiligen Etiketts (310) assoziiert sind.

2. Verfahren nach Anspruch 1, ferner umfassend Anordnen von Etiketten (412a, 412b, 412c) in der passenden Etikettenliste (412) nach Etikettentyp.

3. Verfahren nach einem der vorhergehenden Ansprüche, ferner umfassend:
wenn keine Etiketten (412a, 412b, 412c) mehr in der passenden Etikettenliste (412) übrig sind, Hinzufügen einer neuen formfreien Textzeichenfolge zu einem formfreien Textzwischenspeicher.

4. Verfahren nach einem der vorhergehenden Ansprüche, wobei Absuchen von mehreren Etikettquellen nach Etiketten, die zu der Textzeichenfolge passen, Absuchen von zumindest zweien von einer Liste von einem Onlinedienst, einem Browserlesezeichen, einem Adressbucheintrag und einem formfreien Texteintrag beinhaltet.

5. System zum Suchen nach Fotoetiketten unter Benutzung eines mobilen Kommunikationsgeräts mit einem Display, das eine Etikettauswahlmodusbenutzerschnittstelle (148B) darstellt, umfassend:
einen Speicher (106) zum Speichern von datenprozessorlesbaren Anweisungen; und
einen Prozessor (102), der zum Ausführen der datenprozessorlesbaren Anweisungen imstande ist, um zu veranlassen, dass das System die Schritte des Verfahrens nach einem der Ansprüche 1 bis 4 ausführt.

6. System nach Anspruch 5, wobei das System ein mobiles Kommunikationsgerät (100) umfasst.

7. Datenprozessorlesbares Medium, das Datenprozessorcode speichert, welcher, wenn er in ein Rechengerät geladen wird, das Rechengerät zum Ausführen der Schritte des Verfahrens nach einem der Ansprüche 1 bis 4 geeignet macht.

## Revendications

1. Procédé de marquage de photos et de recherche d'étiquettes à l'aide d'un dispositif de communication mobile ayant un affichage, le procédé comprenant :
la présentation d'une interface d'utilisateur en mode de marquage (148A) pour la sélection par l'utilisateur d'un emplacement (302) pour le marquage dans une photo (301) ;
la présentation d'n champ d'entrée d'étiquette (406) pour recevoir, en tant qu'étiquette photo (412a, 412b, 412c), une chaîne de texte entrée par un utilisateur, l'étiquette photo (412a, 412b, 412c) étant associée à l'emplacement sélectionné par l'utilisateur (302) dans la photo (301) ;
la recherche dans une pluralité de sources de balises des balises qui correspondent à la chaîne de texte, les sources de balises correspondant à une d'une liste d'amis d'un service en ligne, une liste d'entrées de signets de navigateur dans un module de navigateur Internet (138) du dispositif de communication mobile ou une liste d'entrées de carnet d'adresses dans un carnet d'adresses (142) du dispositif de communication mobile ;
l'affichage dans une liste de balises correspondantes (412) de toutes balises (412a, 412b, 412c) qui correspondent à la chaîne de texte pour permettre à l'utilisateur de sélectionner une balise dans la liste de balises correspondantes (412) pour compléter le champ d'entrée de balise (406), et afficher un type de balise pour chaque balise (412a, 412b, 412c) apparaissant dans la liste de balises correspondantes (412), le type de balise étant associé à une icône, le type de balise correspondant à une des listes d'amis du service en ligne, une entrée de signet de navigateur dans le module de navigateur Internet (138) du dispositif de communication mobile, ou une entrée de carnet d'adresses dans le carnet d'adresses (142) du dispositif de communication mobile ;
l'affichage d'une liste de balises (304) avec la photo (301), la liste de balises (304) comprenant une ou plusieurs balises (310) associées à des sujets ou des objets dans la photo (301), chaque balise (310) dans la liste de balises ayant un contexte associé en fonction du type d'étiquette de l'étiquette respective (310) ; et
l'activation, lorsque l'utilisateur fait défiler une étiquette (310) dans la liste d'étiquettes (304), d'un menu comprenant des options de menu contextuelles associées à un type d'étiquette spécifique de l'étiquette respective (310).

2. Procédé selon la revendication 1, comprenant en outre le classement des balises (412a, 412b, 412c) dans la liste de balises correspondantes (412) par type de balise.

3. Procédé selon une quelconque des revendications précédentes, comprenant en outre :
s'il n'y a plus de balises (412a, 412b, 412c) dans la liste de balises correspondantes (412), l'ajout d'une nouvelle chaîne de texte de forme libre à une mémoire cache de texte de forme libre.

4. Procédé selon une quelconque des revendications précédentes, dans lequel la recherche dans la pluralité de sources de balises des balises qui correspondent à la chaîne de texte, comprend la recherche d'au moins deux d'une liste à partir d'un service en ligne, d'un signet de navigateur, d'une entrée de carnet d'adresses et d'une entrée de texte de forme libre.

5. Système de recherche d'étiquettes photo à l'aide d'un dispositif de communication mobile ayant un affichage qui présente une interface d'utilisateur en mode de sélection d'étiquette (148B), comprenant :
une mémoire (106) pour mémoriser des instructions lisibles par le processeur de données ; et
un processeur (102) capable d'exécuter lesdites instructions lisibles par le processeur de données pour amener ledit système à exécuter les étapes du procédé d'une quelconque des revendications 1 à 4.

6. Système selon la revendication 5, dans lequel ledit système comprend un dispositif de communication mobile (100).

7. Support lisible par processeur de données mémorisant un code de processeur de données qui, lorsqu'il est chargé dans un dispositif informatique, adapte le dispositif informatique pour exécuter les étapes du procédé d'une quelconque des revendications 1 à 4.
